(19)

Europäisches
Patentamt
European
Patent Office
Office européen
des brevets

(11) **EP 2 366 991 A1**

(12) **EUROPEAN PATENT APPLICATION**

(43) Date of publication:
**21.09.2011 Bulletin 2011/38**

(51) Int Cl.:
*G01N 21/65* (2006.01)     *G01J 3/44* (2006.01)

(21) Application number: **11154903.6**

(22) Date of filing: **17.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.02.2010 US 713318**

(71) Applicants:
• **Morpho Detection, Inc.
Newark, CA 94560 (US)**
• **General Electric Company
Schenectady, NY 12345 (US)**

(72) Inventors:
• **Botonjic-Sehic, Edita
Wilmington, MA 01887 (US)**
• **Grassi, James H
Wilmington, MA 01887 (US)**

• **Boudries, Hacene
Wilmington, MA 01887 (US)**
• **Freeman, Ivan E Jr
Wilmington, MA 01887 (US)**
• **Lee, Young Kyo
San Diego, CA 92128 (US)**
• **Dasaratha, Sridhar Venkataraman
560066 Banglore (IN)**
• **Vignesh, Thirukazhukundram Subrahmaniam
560066 Banglore (IN)**
• **Yarra, Malathi
560066 Banglore (IN)**
• **Shanmukh, Saratchandra
560066 Banglore (IN)**

(74) Representative: **Smaggasgale, Gillian Helen
W.P. Thompson & Co
55 Drury Lane
London WC2B 5SQ (GB)**

(54) **Probabilistic scoring for components of a mixture**

(57)     A method for analyzing a mixture includes identifying a plurality of possible components of the mixture (402), calculating at least one feature for at least a portion of the plurality of possible components (404), and calculating a probability value for at least a portion of the plurality of possible components (408) based on the at least one feature and at least one transfer function

FIG. 4

EP 2 366 991 A1

**Description**

BACKGROUND

The embodiments described herein relate generally to spectroscopy systems and, more particularly, to analyzing a mixture and, for each component identified by the mixture analysis, calculating a probability that the component is actually present in the mixture.

Rapid identification of unknown materials has emerged as an important problem in a variety of situations such as quality control, failure analysis, clinical assays, and material analysis involving hazardous materials. For example, the quality of a product, such as a drug, is dependent on the purity of the raw materials used, and any contamination within the raw materials may be detrimental to the quality and/or efficacy of the product. As such, identifying the contaminants is important in such situations. Moreover, analytical techniques may also be applied to detect a chemical change in the structure of a material that may lead to failure of critical parts or components in, for example, gas turbine engines. Another application involves identification of unknown materials that are potentially hazardous in nature.

Recently, analytical techniques using spectroscopy have been used in such situations. At least some known spectrometry instruments include a search engine that returns a list of chemicals or components of a sample and, for example, a Euclidean distance, correlation, and the like. For example, at least some known spectrometers identify components of a mixture by comparing a spectrum of the mixture to a plurality of spectra that are each associated with a different component. Moreover, at least some known spectrometers use linear models, mathematical analyses such as an augmented least squares analysis, and/or a state matrix to identify components of a mixture. In addition, at least some known spectrometers use scaling factors and threshold values to facilitate identifying components of a mixture. However, such known spectrometers do not provide to a user a degree of certainty of identification of the components of a mixture.

For example, using Euclidean distance as a basis of certainty in identification of mixture components is generally accurate only for pure substances. However, when used to analyze a mixture, Euclidean distance is generally inaccurate because potential components that are stored in a library of spectra and are yet not present in the mixture have small Euclidean distances with respect to a spectrum of the mixture and are therefore falsely identified as components of the mixture.

BRIEF DESCRIPTION

In one aspect, a method is provided for analyzing a mixture. The method includes identifying a plurality of possible components of the mixture, calculating at least one feature for at least a portion of the plurality of possible components, and calculating a probability value for at least a portion of the plurality of possible components based on the at least one feature and at least one transfer function.

In another aspect, an apparatus is provided for use in analyzing a mixture. The apparatus includes a memory configured to store a library of spectra and a processor coupled to the memory. The processor is configured to identify a plurality of possible components of the mixture using the library, calculate at least one feature for at least a portion of the plurality of possible components, and calculate a probability value for at least a portion of the plurality of possible components based on at least one feature and at least one transfer function, wherein the at least one transfer function includes at least one parameter that is determined using at least one of a training process and expert opinion.

In another aspect, one or more computer-readable storage media having a plurality of computer-executable components are provided for identifying a mixture. The computer-executable components include an acquisition component that when executed by at least one processor causes the at least one processor to acquire data related to the mixture, and an identification component that causes the at least one processor to identify a plurality of components of the mixture. The computer-executable components also include a feature component that causes the at least one processor to calculate at least one feature for at least a portion of the plurality of possible components value based on the mixture data and stored data associated with each possible component, and a probability component that causes the at least one processor to calculate a probability value for at least a portion of the plurality of possible components based on the at least one feature and at least one transfer function.

BRIEF DESCRIPTION OF THE DRAWINGS

The embodiments described herein may be better understood by referring to the following description in conjunction with the accompanying drawings.

Figure 1 is a schematic diagram of an exemplary spectrometer.

Figure 2 is a schematic block diagram of an exemplary optical architecture that may be used with the spectrometer shown in Figure 1.

Figure 3 is a schematic block diagram of an exemplary electrical architecture that may be used with the spectrometer shown in Figure 1.

Figure 4 is a flowchart illustrating an exemplary method of analyzing a mixture.

Figure 5 is a schematic block diagram that illustrates the method shown in Figure 4.

DETAILED DESCRIPTION

Exemplary embodiments of methods, apparatus, and computer-readable storage media for use in identifying components of a mixture and calculating a probability that each component is in the mixture are described hereinabove. The embodiments described herein facilitate processing characteristic data that is collected from a mixture. The spectral data is used to identify possible components of the mixture and to calculate a probability that each possible component is part of the mixture. Analyzing a mixture and identifying a probability associated with each component facilitates identifying the mixture in a short period of time, which may prevent damage to, for example, the structure of a material.

In some embodiments, the term "spectroscopy" refers generally to a process of measuring energy or intensity as a function of wavelength in a beam of light or radiation. Specifically, spectroscopy studies physical properties of a material using absorption, emission, and/or scattering of electromagnetic radiation by atoms, molecules, and/or ions within the material. The term "Raman spectroscopy," as used herein, refers generally to spectroscopy that relies on an inelastic scattering of intense, monochromatic light from a light source, such as a laser, that operates in a visible light range, a near infrared light range, or an ultraviolet light range. Photons of the monochromatic light source excite molecules in the material upon inelastic interaction, which results in an energy of the laser photons being shifted up or down. This energy shift yields information about molecular vibration modes of the material being studied.

Moreover, in some embodiments, the term "mixture" refers generally to a substance having one or more unknown chemical component including pure substances having only a single component and mixtures that include multiple components at various concentrations. Accordingly, the term "mixture" as used herein does not limit the scope of the invention to substances having only multiple components. Moreover, the term "mixture" as used herein does not limit the scope of the invention to physical substances but, rather, may include any group of convoluted items such as, but not limited to, a convolution of multiple waveforms or signals. Furthermore, data representative of a mixture may be referred generally to as, for example, a "spectrum" or a "signal" without limiting the invention to only analyzing either a spectrum of a mixture, such as one determined using spectroscopy, or a signal of a mixture. Accordingly, the terms "spectrum" and "signal" may be used interchangeably.

In some embodiments, the term "feature" refers generally to a value that is computed through the use of a function that takes as inputs processed and/or raw spectra of one or more components of a mixture that are identified by a search algorithm and a spectrum of the mixture itself. Additional inputs may include other characteristics of the mixture components identified by the search algorithm, characteristics of a library of spectra, characteristics of a spectrometer used to acquire the spectrum of the mixture, and characteristics of the mixture itself as a whole, such as a color. Exemplary features include partial correlation values, regression coefficients of the components, a probability value of a test of significance for regression coefficients, and wavelet-based features of component spectra. The above examples are exemplary only, and thus are not intended to limit in any way the definition and/or meaning of the term "feature."

In some embodiments, the term "transfer function" or "parameterized transfer function" refers generally to a function that takes as inputs one or more features of possible mixture components and converts the features into a probability value. In some embodiments, such a transfer function includes parameters that may be specified using expert opinion or may be estimated by training the transfer function using a set of real and/or numerical or synthetic mixtures, or a combination thereof. In some embodiments, the training uses various mixture types such that each mixture type is associated with a different logistic regression model. For example, training data may include a number of synthetic and/or real mixtures including, but not limited to only including, a 100% pure mixture, a 50%-50% mixture, a 90%-10% mixture, a 33%-33%-33% mixture, and an 80%-10%-10% mixture. It should be understood that the mixtures listed above are not considered limitations on embodiments of the invention but, rather, are exemplary types of mixtures that may be used for training purposes. In some embodiments, each of a plurality of transfer functions, such as logistic regression functions, is assigned a weight that is based on information related to a likelihood of each mixture type being encountered in the field.

Moreover, in some embodiments, the training process involves determining a configuration of the parameters that provides high probability values to the correctly identified components in the mixture and low probability values to falsely identified components. Such a configuration may be determined using maximization or minimization of a suitably-chosen objective function, such as a likelihood function. Exemplary maximization processes include, for example, the Newton-Raphson method, a method of steepest descent, genetic algorithms, and the like. Alternatively, the training process may use a combination of parameters designated by expert opinion and parameters obtained by training the transfer function on a set of real and/or numerical mixtures. It should be noted that the training process may be implemented offline using a computer or may be implemented on the apparatus itself. Exemplary transfer functions include linear regression, logistic regression, probit regression, neural networks, support vector machines, Bayesian networks, regression trees, discriminant functions, generalized linear models, and non-linear regression. The above examples are exemplary only, and thus are not intended to limit in any way the definition and/or meaning of the term "transfer function."

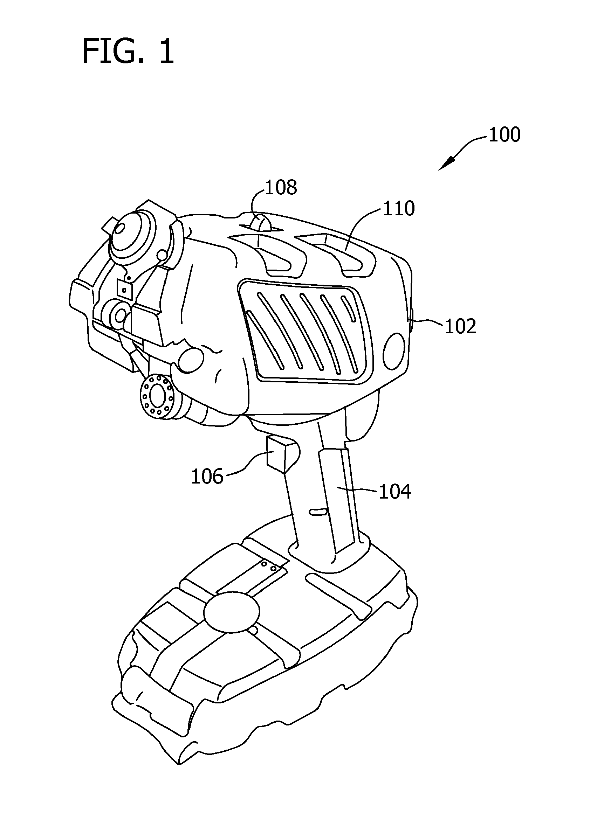

Figure 1 is a schematic diagram of an exemplary portable, handheld spectrometer 100 for use in analyzing a mixture to determine one or more possible components, and to calculate a probability that each of the possible components is present in the mixture. Although Figure 1 describes a portable spectrometer, it should be understood that the algorithms and methods described herein are not limited to use on portable or handheld spectrometers or devices. Rather, the methods described herein may be practiced using stationary devices or using portable devices that are not handheld.

In the exemplary embodiment, apparatus 100 includes a main body 102 and a handle 104 that is coupled to the main body 102. Handle 104 includes an input device 106 that initiates operation of apparatus 100 as described in greater detail below. In the exemplary embodiment, input device 106 is a trigger. However, input device 106 may be any suitable means for receiving a user input such as, but not limited to, a sliding switch, a toggle switch, or a button. Moreover, in the exemplary embodiment, main body 102 includes one or more user control devices 108 such as, but not limited to, a joystick. Main body 102 also includes a display device 110 that displays, for example, a spectrum acquired from the mixture, a list that includes the plurality of possible components within the mixture, and/or a probability value associated with each possible component that reflects a probability that the respective component is a component of the mixture.

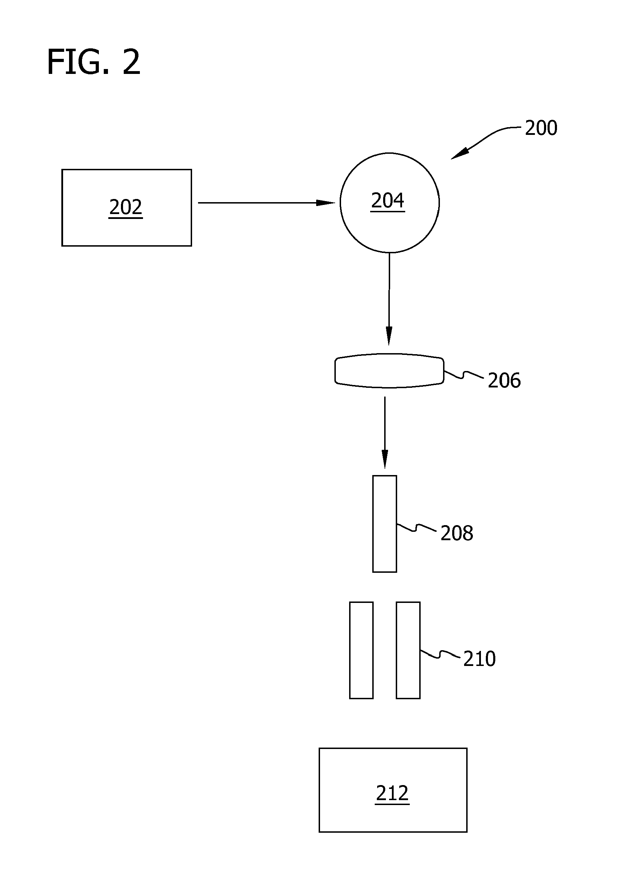

Figure 2 is a schematic block diagram of an exemplary optical architecture 200 of spectrometer 100 (shown in Figure 1). In the exemplary embodiment, optical architecture 200 is positioned within main body 102 (shown in Figure 1). Moreover, in the exemplary embodiment, optical architecture 200 includes an optical source 202, such as a laser that emits a monochromatic light beam in a visible light range, a near infrared light range, or an ultraviolet light range. Specifically, optical source 202 directs incident photons at a sample 204 of the mixture. In the exemplary embodiment, sample 204 emits Raman scattered light in response to the photons at an angle with respect to a path of the incident photons. The scattered light is collected using a lens 206, which is positioned to adjust a focal spot and to enhance a signal strength of the scattered light. Lens 206 is coupled to a Fiber Bragg grating (FBG) 208 via an optical fiber (not shown) to facilitate channeling the scattered light to FBG 208. In some embodiments, FBG 208 has a fixed transmission wavelength that is based on a pitch of FBG 208. In the exemplary embodiment, the scattered light is channeled through a tunable Fabry-Perot cavity 210 towards a sample detector 212.

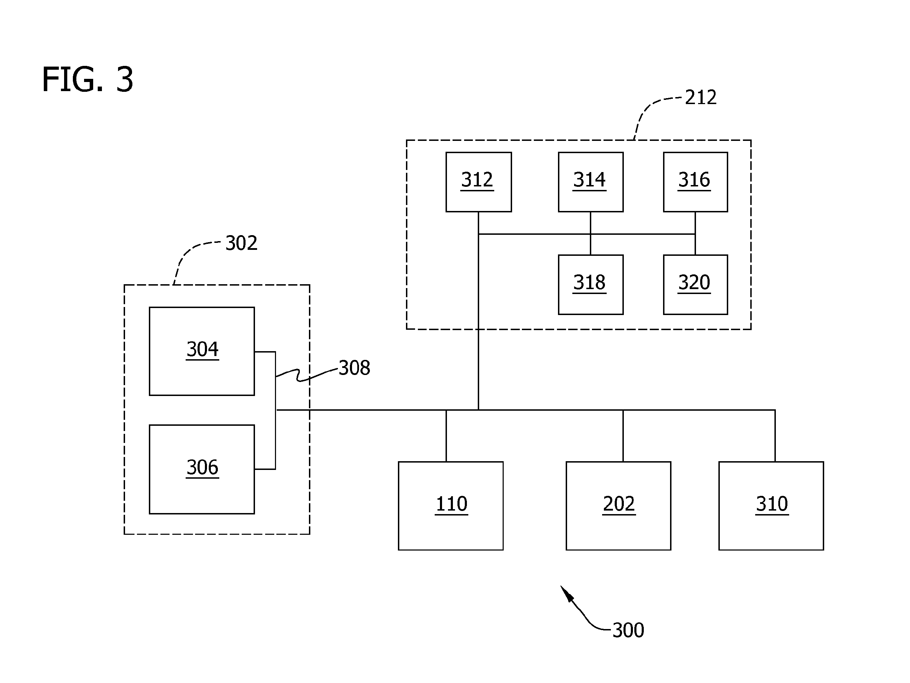

Figure 3 is a schematic block diagram of an exemplary electrical architecture 300 of spectrometer 100 (shown in Figure 1). In the exemplary embodiment, spectrometer 100 includes a controller 302 that includes a processor 304 and a memory 306 that is coupled to processor 304 via an address/data bus 308. Alternative embodiments of controller 302 may include more than one processor 304, memory modules 306, and/or different types of memory modules 306. For example, memory 306 may be implemented as, for example, semiconductor memories, magnetically readable memories, optically readable memories, or some combination thereof. In some embodiments, controller 302 is coupled to a network (not shown) via a network interface 310. In the exemplary embodiment, memory 306 stores a plurality of spectra, such as Raman spectra, of a plurality of chemical components.

Moreover, in the exemplary embodiment, electrical architecture 300 includes optical source 202 and sample detector 212. Sample detector 212 includes an avalanche photodiode (APD) 312, a discriminator 314, a digitizer 316, and one or more amplifiers, such as a preamplifier 318 and a high-gain amplifier 320. Raman scattered light emitted by sample 204 (shown in Figure 2) is incident upon APD 312. In response to the Raman scattered light, APD 312 outputs a current pulse to preamplifier 318, which shapes the pulse to create a Nuclear Instrumentation Methods (NIM) standard current pulse. Amplifier 320 receives the NIM pulse, and converts the NIM pulse into a voltage signal.

Discriminator 314 receives the amplified voltage signal from amplifier 320, and isolates single photon signals that correspond to voltage pulses within a specified range. Discriminator 314 outputs an analog signal based on the isolated single photon signals. Digitizer 316 converts the analog signal into a digital signal. Processor 304 determines a spectrum for sample 204 based on the digital signal. In some embodiments, processor 304 causes display 110 to display the spectrum to a user.

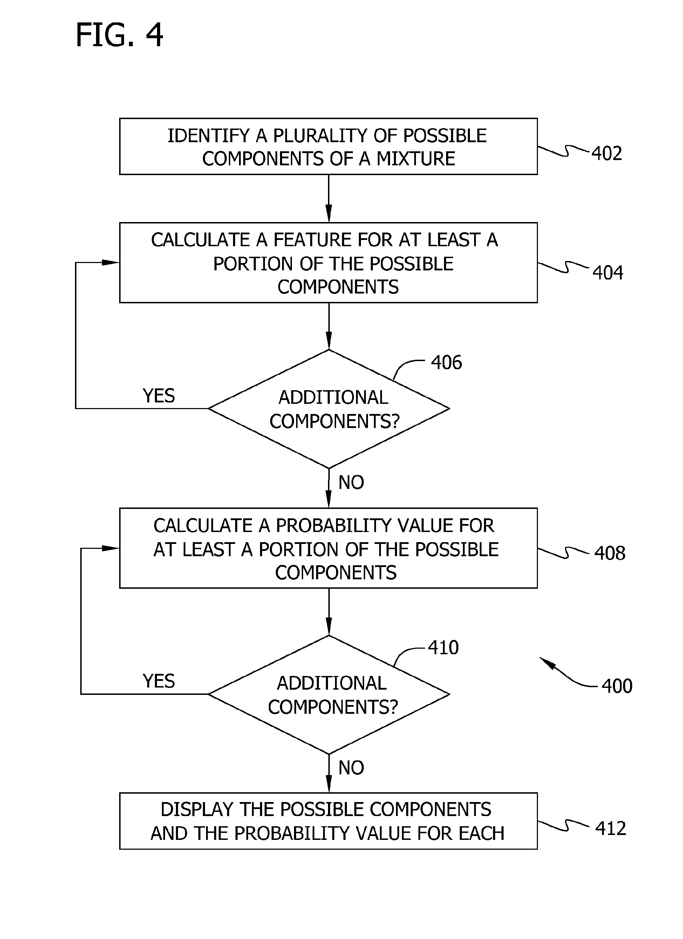

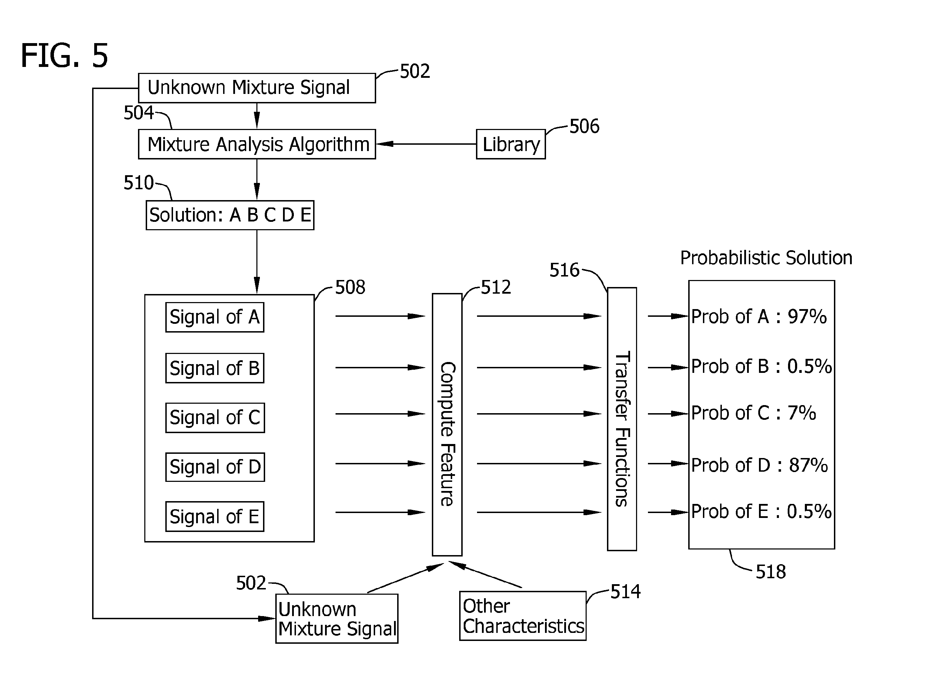

Figure 4 is a flowchart 400 illustrating an exemplary method of analyzing a mixture. Figure 5 is a schematic block diagram that illustrates the method shown in Figure 4. It should be understood that, although the description below is directed towards identifying a chemical mixture using a spectrometer, the methods described below is not to be limited to such a use. Rather, the method described below may also be used to acquire an unknown mixture of signals, such as voice or transmission signals, to identify possible known components of such signals, and to determine a probability that each of the possible known components is actually present within the unknown mixture of signals.

In the exemplary embodiment, spectrometer 100 (shown in Figure 1) identifies 402 a plurality of possible components of a mixture sample, such as sample 204 (shown in Figure 2). Specifically, spectrometer 100 acquires 502 a spectrum, such as a Raman spectrum, of the mixture. Controller 302 (shown in Figure 3) uses an identification algorithm 504 to compare the mixture spectrum to a plurality of spectra stored in a library 506 within memory 306 (shown in Figure 3). Based on the comparisons, controller 302 identifies the plurality of possible components 510. Signals 508 of the plurality of components 510 are extracted from library 506. In the exemplary embodiment, the identification algorithm is run a selected number of times, which results in a corresponding number of possible components.

Moreover, in the exemplary embodiment, spectrometer 100 calculates 404 one or more features 512 for each possible component. The features may include, for example and not by way of limitation, a partial correlation value, a regression coefficient, a wavelet-based feature, or a probability value that tests the significance of a regression coefficient. Moreover, the features are calculated based on, for example, the mixture spectrum 502 and/or other characteristics 514 that may include properties of spectrometer 100, properties of library 506, and the like. In the exemplary embodiment, controller 302 calculates at least a partial correlation value by performing a first regression analysis that includes fitting a regression model for the mixture spectrum against a spectrum of each possible component except for a first possible component, as shown in Equation (1):

$$y_{fit(j)} = \sum_{1 \le k \le N, k \ne j} b_{k(j)} x_k \qquad \text{Eq. (1)}$$

where $b_{k(j)}$ is a regression coefficient, $y_{fit(j)}$ is a fitted value for the unknown using this regression analysis, and ($j$) is used to denote that the regression is completed using all other spectra other than the j$^{th}$ spectrum.

For example, if the search algorithm results in five possible components, controller 302 performs the first regression analysis for the mixture spectrum against the spectra of the second, third, fourth, and fifth possible components. Controller 302 then calculates a first residual value for the first possible component, as shown in Equation (2).

$$ry_{(j)} = y - y_{fit(j)} \qquad \text{Eq. (2)}$$

In the exemplary embodiment, controller 302 then performs a second regression analysis by fitting a regression model for the spectrum of the first possible component against a spectrum of each of the remaining possible components, as shown in Equation (3):

$$x_{fit(j)} = \sum_{1 \le k \le N, k \ne j} a_{k(j)} x_k \qquad \text{Eq. (3)}$$

where $a_{k(j)}$ is a regression coefficient of regressing $x_j$ on all other N-1 best match spectra, and $x_{fit(j)}$ is the fitted value for $x_j$ using this regression.

For example, controller 302 performs the second regression analysis for the spectrum of the first possible component and the spectra of the second, third, fourth, and fifth possible components. The outcome of the second regression analysis is used to calculate a second residual value for the first possible component using Equation (4).

$$e_j = x_j - x_{fit(j)} \qquad \text{Eq. (4)}$$

In the exemplary embodiment, controller 302 calculates a partial correlation value for the first possible component based on the first and second residual values, as shown in Equation (5):

$$\rho_j = \frac{\sum_i ry_{(j)i} e_{ji}}{\sqrt{\sum_i e_{ji} e_{ji} \sum_i ry_{(j)i} ry_{(j)i}}} \qquad \text{Eq. (5)}$$

where $i$ varies over the points in the spectra.

Although the operations described above relate to using a partial correlation value as the feature, it should be understood that other features may be used in addition to or instead of a partial correlation value. For example, the feature may be a regression coefficient, a wavelet-based feature, or a probability value that tests the significance of a regression coefficient. Moreover, although the operations described above relate to using chemical spectra, it should be understood that other component and/or mixture data may be used. For example, the operations described above may be used with signal waveforms or any other suitable data type.

Controller 302 then determines 406 whether one or more features have been determined for each possible component of the mixture. If controller 302 determines that there is one or more additional possible components to analyze, controller 302 repeats the above-described steps for each possible component. For example, for the second possible component, controller 302 performs the first regression analysis for the mixture spectrum against the spectra of the first, third, fourth, and fifth possible components. Controller 302 then calculates a first residual value for the second possible component. In the exemplary embodiment, controller 302 then performs the second regression analysis for the spectrum of the second possible component and the spectra of the first, third, fourth, and fifth possible components. The outcome of the second regression analysis is used to calculate a second residual value for the second possible component. In the exemplary embodiment, controller 302 calculates a partial correlation value for the second possible component based on the first and second residual values.

In the exemplary embodiment, if a possible component is truly present within the mixture, then the feature of that possible component will be close to one irrespective of the magnitude of a transfer function parameter of each of one or more parameterized transfer functions. More specifically, for analyzing a chemometric mixture, a component that is truly present in the mixture will have a partial correlation value close to unity irrespective of whether the component is present at 10% or at 90% of the spectral concentration.

In the exemplary embodiment, and once a feature has been calculated for each possible component, spectrometer 100 calculates 408 a probability value for each possible component of the mixture. Specifically, controller 302 calculates a probability value for a first possible component based on one or more parameterized transfer functions 516. as shown in Equation (6):

$$p_i = \frac{e^{\alpha_i + \beta_i r_i}}{1 + e^{\alpha_i + \beta_i r_i}} \qquad \text{Eq. (6)}$$

where $p_i$ is the probability of an identified component being present based on the model for the $i^{th}$ mixture type and $\alpha_i$ and $\beta_i$ are the parameters of a corresponding transfer function.

Controller 302 then calculates a final probability value based on the probability values calculated for the first possible component and a weighting value assigned to each transfer function. For example, the probability value of the first possible component may be calculated as a sum of products of a weight of each transfer function and the probability value of the first component according to the corresponding transfer function, as shown in Equation (7).

$$p_A = \sum_{i=1}^{N} w_i p_{Ai} \qquad \text{Eq. (7)}$$

The final probabilistic scoring function is a weighted average of the transfer functions. In one embodiment, the weight assigned to each transfer function is based on information relating to a likelihood of each mixture type being encountered in the field. In an alternative embodiment, the weights may be evenly divided and adjusted as such information relating to likelihood becomes available. In another alternative embodiment, the weights may be set to enhance performance criteria of spectrometer 100, such as enhancing probability measures for pure component cases, ensuring low probabilities to spurious components, and the like. Controller 302 then determines 410 whether a probability value has been determined for each possible component of the mixture. If controller 302 determines that there are one or more additional possible components to analyze, controller 302 repeats the above-described steps for each possible component.

In the exemplary embodiment, and once a probability value has been calculated for each possible component, spectrometer 100 displays 412 a list 518 of each possible component and the probability value for each possible component. In one embodiment, the probability value is displayed using a percentage. In an alternative embodiment, the probability value is displayed using a ratio. However, any suitable method of displaying a probability value may be employed.

Exemplary embodiments of methods, apparatus, and computer-readable storage media for determining likely components of a mixture are described above in detail. The methods, apparatus, and computer-readable storage media are not limited to the specific embodiments described herein but, rather, operations of the methods and/or components of the system and/or apparatus may be utilized independently and separately from other operations and/or components described herein. Further, the described operations and/or components may also be defined in, or used in combination with, other systems, methods, and/or apparatus, and are not limited to practice with only the systems, methods, and storage media as described herein.

A spectrometer or controller, such as those described herein, includes at least one processor or processing unit and a system memory. The spectrometer or controller includes at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary chemical identification system environment, embodiments of the invention are operational with numerous other general purpose or special purpose chemical identification system environments or configurations. The chemical identification system environment is not intended to suggest any limitation as to the scope of use or functionality of any aspect of the invention. Moreover, the chemical identification system environment should not be interpreted as having any dependency or requirement relating to any one or combination of components illustrated in the exemplary operating environment. Examples of well known chemical identification systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program components or modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

In some embodiments, the term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term processor.

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A method for analyzing a mixture, comprising:

   identifying a plurality of possible components of the mixture;
   calculating at least one feature for at least a portion of the plurality of possible components; and
   calculating a probability value for at least a portion of the plurality of possible components based on the at least one feature and at least one transfer function.

2. A method in accordance with Claim 1, wherein calculating at least one feature comprises calculating, for at least a portion of the plurality of possible components, at least one of a partial correlation value, a regression coefficient, a wavelet-based feature, and a probability value related to a test of significance of a regression coefficient.

3. A method in accordance with Claim 1, wherein identifying a plurality of possible components comprises:

   acquiring a spectrum of the mixture; and
   identifying the plurality of possible components using a library of stored spectra.

4. A method in accordance with Claim 1, wherein the at least one transfer function includes a plurality of transfer functions, said calculating a probability value comprises:

   calculating, for at least a portion of the plurality of possible components, a probability value associated with each transfer function; and
   calculating a final probability value based on the respective probability values calculated for each possible component for the plurality of transfer functions.

5. A method in accordance with Claim 4, wherein calculating a final probability value is further based on a weighting factor associated with each of the plurality of transfer functions.

6. A method in accordance with Claim 1, further comprising determining parameters for use by the at least one transfer function by training the transfer function using mixture data.

7. A method in accordance with Claim 1, wherein the transfer function is one of a linear regression model, a logistic regression model, a probit regression model, a neural network, a support vector machine, a Bayesian network, a regression tree, a discriminant function, a generalized linear model, and a non-linear regression model.

8. An apparatus for use in analyzing a mixture, said apparatus comprising:

   a memory configured to store a library of spectra; and
   a processor coupled to said memory, said processor configured to:

      identify a plurality of possible components of the mixture using said library;
      calculate at least one feature for at least a portion of the plurality of possible components; and
      calculate a probability value for at least a portion of the plurality of possible components based on at least one feature and at least one transfer function, wherein the at least one transfer function includes at least one parameter that is determined using at least one of a training process and expert opinion.

9. An apparatus in accordance with Claim 8, wherein said processor is further configured to:

use a search algorithm to search said library; and
identify the plurality of possible components based on output from the search algorithm.

10. An apparatus in accordance with Claim 8, wherein the at least one feature includes at least one of a partial correlation value, a regression coefficient, a wavelet-based feature, and a probability value related to a test of significance of a regression coefficient.

11. An apparatus in accordance with Claim 8, wherein said processor is further configured to:

calculate a probability value for at least one of the plurality of possible components using the at least one transfer function; and
calculate a final probability value based on the respective probability values calculated for the at least one possible component from the at least one transfer function.

12. An apparatus in accordance with Claim 8, wherein the at least one transfer function includes a plurality of transfer functions, said processor is further configured to:

calculate a probability value for at least one of the plurality of possible components using the plurality of transfer functions; and
calculate a final probability value based on the respective probability values calculated for the at least one possible component from the plurality of transfer functions.

13. An apparatus in accordance with Claim 12, wherein each of plurality of transfer functions includes a weighting factor that corresponds to a mixture type.

14. An apparatus in accordance with Claim 8, wherein the at least one transfer function includes at least one of a linear regression model, a logistic regression model, a probit regression model, a neural network, a support vector machine, a Bayesian network, a regression tree, a discriminant function, a generalized linear model, and a non-linear regression model.

15. An apparatus in accordance with Claim 8, wherein the parameters for use by the at least one transfer function are determined by training the at least one transfer function using mixture data.

16. One or more computer-readable storage media having a plurality of computer-executable components for identifying a mixture, said plurality of computer-executable components comprising:

an acquisition component that when executed by at least one processor causes the at least one processor to acquire data related to the mixture;
an identification component that when executed by the at least one processor causes the at least one processor to identify a plurality of components of the mixture;
a feature component that when executed by the at least one processor causes the at least one processor to calculate at least one feature for at least a portion of the plurality of possible components value based on the mixture data and stored data associated with each possible component; and
a probability component that when executed by the at least one processor causes the at least one processor to calculate a probability value for at least a portion of the plurality of possible components based on the at least one feature and at least one transfer function.

17. One or more computer-readable storage media in accordance with Claim 16, wherein the probability component causes the at least one processor to:

calculate, for at least a portion of the plurality of possible components, a probability value associated with the at least one transfer function; and
calculate a final probability value based on the respective probability values calculated for each possible component for the at least one transfer function.

18. One or more computer-readable storage media in accordance with Claim 17, wherein the at least one transfer function includes a plurality of transfer functions, and wherein the final probability value is further based on a weighting factor associated with each of the plurality of transfer functions.

**19.** One or more computer-readable storage media in accordance with Claim 16, wherein parameters for use by the at least one transfer function are determined by training the transfer function using mixture data.

**20.** One or more computer-readable storage media in accordance with Claim 16, wherein the at least one feature includes at least one of a partial correlation value, a regression coefficient, a wavelet-based feature, and a probability value related to a test of significance of a regression coefficient; and
wherein the at least one transfer function includes at least one of a linear regression model, a logistic regression model, a probit regression model, a neural network, a support vector machine, a Bayesian network, a regression tree, a discriminant function, a generalized linear model, and a non-linear regression model.

# FIG. 1

# FIG. 2

FIG. 3

# FIG. 4

```
┌──────────────────────────────────┐
│   IDENTIFY A PLURALITY OF POSSIBLE │ ～402
│    COMPONENTS OF A MIXTURE         │
└──────────────────────────────────┘
                 │
                 ▼
┌──────────────────────────────────┐
│   CALCULATE A FEATURE FOR AT LEAST A │ ～404
│    PORTION OF THE POSSIBLE          │
│    COMPONENTS                       │
└──────────────────────────────────┘
                 │
                 ▼
            ╱────────╲   406
   YES  ───╱ ADDITIONAL ╲
          ╲ COMPONENTS? ╱
            ╲────────╱
                 │ NO
                 ▼
┌──────────────────────────────────┐
│   CALCULATE A PROBABILITY VALUE FOR │ ～408
│   AT LEAST A PORTION OF THE POSSIBLE │
│    COMPONENTS                       │
└──────────────────────────────────┘
                 │
                 ▼
            ╱────────╲   410
   YES  ───╱ ADDITIONAL ╲          400
          ╲ COMPONENTS? ╱
            ╲────────╱
                 │ NO
                 ▼
┌──────────────────────────────────┐
│   DISPLAY THE POSSIBLE COMPONENTS  │ ～412
│   AND THE PROBABILITY VALUE FOR EACH │
└──────────────────────────────────┘
```

# FIG. 5

Unknown Mixture Signal — 502

504 — Mixture Analysis Algorithm ← Library — 506

510 — Solution: A B C D E

508 — Signal of A, Signal of B, Signal of C, Signal of D, Signal of E

512 — Compute Feature

516 — Transfer Functions

Probabilistic Solution
- Prob of A : 97%
- Prob of B : 0.5%
- Prob of C : 7%
- Prob of D : 87%
- Prob of E : 0.5%

518

502 — Unknown Mixture Signal

Other Characteristics — 514

EP 2 366 991 A1

Europäisches
Patentamt

European
Patent Office

Office européen
des brevets

## EUROPEAN SEARCH REPORT

Application Number

EP 11 15 4903

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 596 196 A (COOPER JOHN B [US] ET AL) 21 January 1997 (1997-01-21) * column 1, lines 12-16; figure 1 * * column 2, line 65 - column 4, line 57 * * column 8, line 61 - column 10, line 54; claims 1,26,38; tables C,D,E * ----- | 1-20 | INV. G01N21/65 G01J3/44 |
| X | US 2009/268203 A1 (UZUNBAJAKAVA NATALLIA [NL] ET AL) 29 October 2009 (2009-10-29) * paragraphs [0001], [0002], [0006] - [0020], [0029] - [0032]; claims 16,27 * ----- | 1-20 | |
| X | HUSAIN S ET AL: "Characterization and identification of edible oil blends and prediction of the composition by artificial neural networks -- A case study", CHEMOMETRICS AND INTELLIGENT LABORATORY SYSTEMS, ELSEVIER SCIENCE PUBLISHERS B.V. AMSTERDAM, NL, vol. 35, no. 1, 1 November 1996 (1996-11-01), pages 117-126, XP004071154, ISSN: 0169-7439, DOI: DOI:10.1016/S0169-7439(96)00047-0 * pages 117-120 * ----- | 1-20 | TECHNICAL FIELDS SEARCHED (IPC) G01N G01J |

The present search report has been drawn up for all claims

| Place of search | Date of completion of the search | Examiner |
|---|---|---|
| Munich | 24 May 2011 | Duijs, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 15 4903

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| US 5596196 | A | 21-01-1997 | NONE | | |
| US 2009268203 | A1 | 29-10-2009 | EP | 1877756 A1 | 16-01-2008 |
| | | | WO | 2006114773 A1 | 02-11-2006 |
| | | | JP | 2008539417 T | 13-11-2008 |

For more details about this annex : see Official Journal of the European Patent Office, No. 12/82